# EUROPEAN PATENT APPLICATION

(11) **EP 2 816 318 A1**
(43) Date of publication of application: **24.12.2014**
(21) Application number: 13305839.6
(22) Date of filing: 20.06.2013
(51) Int. Cl.: G01C 21/00, G06Q 10/04, G08G 1/00

(54) **Method of and apparatus for enabling transport of physical assets**

(71) Applicant: Thomson Licensing, 92130 Issy-les-Moulineaux (FR)
(72) Inventor: Van de Poel, Dirk, 2630 Aartselaar (BE); Goemaere, Patrick, 2960 Brecht (BE); Jonckheer, Kurt, 2000 Antwerpen (BE)
(74) Representative: Lindemann, Robert

(57) **Abstract**

The present invention provides a method and a system for enabling the transport of the asset from its current location to its target location by tracking the current locations and target locations of available transport means and modifying the respective routes of the transport means and/or the asset so as to enable partially shared transport in accordance with previously negotiated parameters. The previously negotiated parameters may also define a limit up to which distance or extra-time a route may be modified.

## Description

### Field

The invention pertains to the field of transporting physical assets along routes following predefined route segments.

### Background

Efficiently organizing and enabling transport of multiple assets using multiple transport means is an old yet persistent problem. Notably, matching the transport needs for an asset requiring transport being at one location, and a transport means being at a different location, and both having different target locations, requires tradeoffs in terms of time to wait until the transport begins, length and/or duration of the transport in case of collective transport, etc.

The general problem is long known under the name of the travelling salesman problem, or TSP. TSP is an attempt to find the ideal, i.e. usually the shortest route connecting a number of locations that must be visited by the travelling salesman. In its simplest form, all locations are known beforehand. More complex problems in this context deal with predefined time windows, within which individual locations must be visited. E.g., when a customer service person who negotiates a certain time window for repairing a customer's home appliance, the time window needs to be taken in to account when planning the route.

A further level of complexity is added when not all locations are known beforehand, but locations to be visited are added while the travelling salesman is already *en route.* This case is also referred to as online TSP. In this case the route needs to be adapted each time a new location to be visited is added, for best matching the previously planned route. Such problem occurs, e.g., when a technician of an automobile club is on duty and receives new calls for technical support while on his or her way. A central dispatch unit must then match the previously planned routes with the new locations to visit.

Usually a plurality of technicians is on duty and their locations change over time. In addition, a time window is provided, within which the technician or service person is to visit the location. This combined problem is also referred to as online TSP with time windows.

However, all of the known problems deal with visiting locations. Another related problem is known from taxi dispatching, which nowadays is focused on start and end points of routes, availability of taxis, and actual location of free taxis. Taxi sharing is usually done only by users who know they go to the same destination, or for one of whom the destination is on the route travelled.

Sometimes sub-routes are exploited by taxi drivers. For example, a taxi driver picks up further passengers during an actual ride. This is however more an ad-hoc method for taxi sharing, than a fully optimized method.

### Summary

The present invention deals with enabling the transport of physical assets from a current location to a target location, using a limited number of transport means that are located at locations different from the current locations of the assets requesting transport and that travel on routes partly different from those that are ideal for the individual assets' transport and partly common to both.

The term transport means as used throughout this specification is a synonym for any means of transport capable of and suited for transporting persons or goods, or in general, physical assets, from one point to another along predefined route segments. This includes all kinds of land, air and sea transport means generally known to the skilled person and is not limited to commercial transport operators, but can also include private persons that opt in to a route sharing scheme or the like. Also, multi-modal transports, i.e. changing between different kinds of transport means, lie within the scope of the patent.

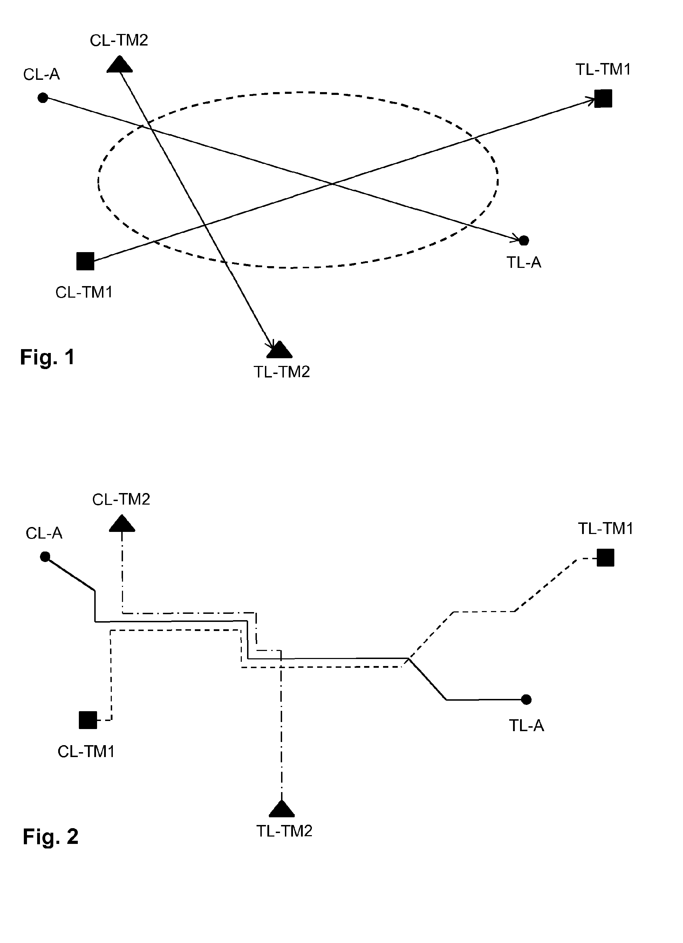

The term asset as used throughout this specification is a synonym for any physical good or a person that can be transported in any space that allows for transport along routes that are composed from predefined route segments. A predefined route segment in this context may be determined by a segment of a road, an air corridor, or waterway, but it may also be defined by a direct connection between two locations, as will be shown further below with reference to figure 1.

In order to efficiently enable the individual transport requests of assets the present invention suggests trying to best match routes of the asset and the transport means, and to share the transport means at least for a section of the route. This matching requires continuously or at suitable time intervals transmitting current locations of transport means on their ways to their respective target locations to a central unit, and assets requesting transport informing the central unit of their respective current locations and their target locations. The central unit matches routes of transport means with routes of assets and suggests detours for transport means to pick up assets, and detours for the transport means' original load and/or the asset on their way to their respective target locations. Sharing a transport means along a common section of otherwise individual routes may minimize the transport costs and/or increase the profit for a transport organizing entity.

In an exemplary case of taxi sharing taxi the method allows for optimizing taxi usage by fulfilling more than one transportation request, or taxi ride demands, during the same route, or almost the same route. The system in accordance with the invention also allows for taking into account the actual traffic on routes, and making suggestions for re-routing depending on traffic or other factors. The invention makes advantageous use of the general availability of location tracking, e.g. using the Global Positioning System GPS, or alternative systems known as GLONASS, and the like.

In the context of the present specification the term real-time is used either in its literal meaning, but may also be used in the sense of timely enough so as to allow for proper operation of the method. Consequently, real-time transmission of current positions may depend on the speed of a transport means, e.g. fewer updates when moving slowly, or even standing, and more frequent updates at higher speed. Likewise, the frequency of updates may increase when a transport means approaches a significant point along the route, e.g. a pickup or changeover point.

Figure 1 shows a schematic and reduced view of a current location CL-A of an asset that is to be transported to a target location TL-A, and further of current locations of a first transport means CL-TM1 and of a second transport means CL-TM2, and of their respective target locations TL-TM1, TL-TM2. It is easy to imagine that the route of the first or the second transport means may be selected so as to have a section in common with the route of the asset. Such common route segment is likely to be found within the area indicated by the dashed oval.

The present invention builds on this initial situation and provides a method and a system for enabling the transport of the asset from its current location to its target location by tracking the current locations and target locations of available transport means and modifying the respective routes of the transport means and/or the asset so as to enable shared transport in accordance with previously negotiated parameters. The previously negotiated parameters may also define a limit up to which distance or extra-time a route may be modified.

Previously negotiated parameters in this context include, inter alia, a willingness of a transport means to make detours, a maximum length of detour that is accepted, either in terms of distance or in terms of time required for the detour, and a time duration that the asset is willing to wait before the transport is beginning. Willingness may depend on the initial load or cargo of a transport means, e.g. a passenger's willingness to share a taxi, with how many additional passengers, and under which circumstances, the urgency of a transport as negotiated between the transport organizing entity and the requesting party, or the like. In addition, a transport fee for either party in a shared transport may be calculated in dependence of one or more of these parameters, or in dependence of further parameters, as will be elucidated further below. The transport fee can be recalculated each time one or more parameters change. For example, if, during a transport of one asset, further assets are picked up along the way, the transport fee for the original asset, i.e. the one that was already on the transport, can be further reduced.

Transport means' properties may also be taken into account in a weighted manner, i.e. average or maximum speed of transport means, or level of on-board comfort, type or quality of transport means, or the like. For example, if a first transport means is much slower on average than a second transport means, the second transport means may be preferred over the first one, even if the first one is closer to the pick-up point, because the total travelling time may still be shorter compared to taking the first transport means. This may be a strong argument irrespective of different total lengths of common route segments for the first and second transport means. I.e., a transport means that is faster, on average, may be preferred even if the detour to take is longer before arriving at the target location. Faster in this context does not necessarily relate to the transport means itself, but may reflect different speed limits on different routes, or on the detour route sections.

The current location of an asset requesting transport may be provided through an application running on a mobile device that is equipped with a geo-location sensor, or by providing a picture of the surrounding of the current location and matching the picture with stored images of locations. Such stored images may, e.g., be taken from Google Inc.'s Streetview ® resource.

The location of the asset requesting transport may be automatically transmitted along with a target location when sending the request, i.e. without requiring any particular action directed to transmitting the current location.

The same mechanism may be applied for locating a transport means. In this case, the transport means could provide pictures of its surrounding, continuously as a stream or at regular intervals, to a matching entity, for enabling determining its whereabouts. Further information such as traffic conditions can also be derived from such video or image information.

Generally, in accordance with the invention, detour routes may be weighted by the conditions of the detour route segment. E.g., in case a detour is longer by distance, but the segment can be travelled at a higher speed, the detour may be given a lower "nuisance-factor" / "disturbance-factor", and vice versa.

It is obvious that tradeoffs can be made in respect of and weights can be given to any of the parameters or any combination thereof.

An obvious solution to the transport problem shown in figure 1 is having the transport means that is located closest to the current position of the asset pick up the asset, take a route to the closest target location, i.e. either the target location of the transport means or of the asset, and take the route to the next target location. With reference to figure 1 this could look like the second transport means starting at its current location CL-TM2, picking up the asset at its current location CL-A, dropping off its initial load at its initial target location TL-TM2, and taking the asset to its target location TL-A. This solution may be considered having balanced burdens for the initial load and the asset, i.e. both parties to the shared transport travel one further segment in addition to the shared segment.

However, depending on the initial locations and targets, the obvious solution may result in what can be referred to as unbalanced burden between the parties, as one party may have to travel all segments of the combined routes before eventually arriving at its target location, while the other party may travel fewer route segments. Again with reference to figure 1 this could look like the first transport means starting at its current location CL-TM2, picking up the asset at its current location CL-A, dropping off the asset at its target location TL-A, and taking its initial load to the initial target location TL-TM1. In other words, the initial load of transport means 1 travels three segments in total, while the asset is granted a one-segment direct transport.

As mentioned above, the direct transport job may bear a higher share of the compound transport fee for both transports in order to compensate for the unbalanced burden.

The situation discussed with reference to figure 1 is an ideal situation, in which the routes between any station are straight lines. In reality, such situation is unlikely to be found. For example, ground-based transport usually relies on roads that may be blocked in one direction, either permanently or temporarily. Or, roads may not even remotely make a direct connection between stations that are close to each other in direct line, e.g. due to topographic properties such as rivers or mountains. In such situation it may be advantageous to use a transport means that is located farther away from the asset's current location. Yet further, traffic on certain sections of a route that would be travelled if using one transport means may be very slow, which would result in a longer total time for the asset's transport as compared to taking a different transport means, which may have a longer effective distance, but can travel the distance at a higher speed.

Figure 2 shows a more realistic situation, e.g., as found in a city. The various lines connecting current positions of transport means and assets with their respective target locations may roughly represent streets in an exemplary city. For example, the solid line shows the route through the city from the current location of the asset CL-A to its target location TL-A. Likewise, the dashed line shows the route through the city from the current location CL-TM1 of the first transport means to its target location TL-TM1. The dash-dotted line shows the corresponding route for the second transport means. It is readily apparent that all routes have segments in common.

A system in accordance with the invention is adapted for receiving current locations of a plurality of transport means, maintaining planned routes of the plurality of transport means, and receiving transport requests from assets, indicating their current position as well as their target location. Also, the system receives soft factors such as willingness to share a transport means, willingness to wait before the transport actually begins, price sensitivity, etc. Further soft factors will be introduced and discussed further below. The system also maintains a map of route segments, and includes a processing unit that is adapted to determine routes, common or shared route segments, and negotiate sharing route segments based on current locations of assets and transport means, soft factors, etc.

It goes without saying that the system that handles the shared transport is also capable of simply finding the closest transport means that currently has no route planned and that is available for fulfilling the asset's transport request.

A system or apparatus suitable for use in accordance with the present invention is described in European patent application no. EP 133 05 710, filed on 30 May 2013, the content of which is hereby incorporated by reference.

In a development of the invention the asset's transport route is shared between two or more transport means, and the asset changes transport means at some point during the travel. Preferably, the location and the time for changing transport means is continuously re-calculated based on current locations of the transport means that are updated in real time, and communicated to the transport means. The location and the time for changing transport means may in addition also be depending on a corresponding information provided in the transport request indicating the willingness of an asset and/or a transport means for interrupting a transport to allow for a change-over window, i.e. a time period during which the change-over between two transport means can be effected. The request may, e.g., indicate the maximum time duration of the change-over window.

In a further development of the invention the central unit employs trend analysis for making predictions where and when along an already planned and currently served route further assets may be likely to request transport. Such prediction may be done based on statistical data from past transports, including location, time of day, day of week, public holidays, regularly recurring special events, or day, time, and location of events retrieved from corresponding announcements or event calendars on the internet. A prediction may suggest to a transport means currently serving a route, i.e. transporting an asset, to make a minor detour from the currently planned route, for getting closer to a location or region where further assets are likely to request transport in the nearest future. Employed on a large scale this trend analysis may globally optimize the transport times by lowering the average number and/or length of detours needed for picking up further assets along a route that is currently being served, i.e., along which an assets is currently transported.

In another development of the invention operators of transport means can bid for the asset's transport request. For example, the asset's transport request can include a bidding option, which opens an opportunity for multiple transport means that share a route section with the asset's route to make bids for the right to carry out the transport. The bids can include, inter alia, a transport fee and estimated times for pickup and duration of travel. The transport request can already include an indication of the maximum fee, waiting time, travel duration, detour, etc. The bids may be communicated in real-time or near-real-time to the assets requesting transport, and may be used for selecting and closing a deal with one of the bidders and the corresponding transport means.

In yet another development of the invention the requester can provide a feedback on the quality of the transport. Quality may include timeliness, cleanliness of the transport means, information on the driver, etc. Such information may be associated with a driver or a transport organizing entity, and may influence selection of the transport means. E.g., a transport organizing entity or a transport means having negative feedback may not be preferred over others, even if the current location or the route, or both, would have better match rating with a new transport request. The system can also maintain customer profiles and their preferences and ratings, and take these into account when suggesting a transport in response to a corresponding request. This could also be used for strengthening a relationship between a transport organizing entity and a transport requesting party, e.g. through a fee reduction for one party requesting multiple transports over a certain period. Also, the feedback can be provided at the other side of the transaction, i.e., a transport organizing entity can provide ranking for requesting parties.

Any of the developments and embodiments of the inventive method as described above may be combined in suitable ways that will be readily apparent to the skilled person in light of the present patent specification.

While the method will be described in the following with similarities to transporting a person from one location to another it is not limited to this example. The method and the system implementing the method may also be used for transporting goods or other physical assets in any space that allows for transport along routes that are composed from predefined route segments.

### Description of drawings

The invention will be described in the following with reference to the drawings, in which
- Figure 1: shows a schematic view of positions of transport means, assets, and their current and target locations in an ideal environment;
- Figure 2: shows an exemplary real-world representation of the schematic view of figure 1;
- Figure 3: shows a first example of shared route segments and detour segments in accordance with a first embodiment of the invention;
- Figure 4: represents a second example of shared route segments and detour segments in accordance with a second embodiment of the invention;
- Figure 5: shows a third example of shared route segments and detour segments in accordance with a third embodiment of the invention;
- Figure 6: represents a fourth example of shared route segments and detour segments in accordance with a fourth embodiment of the invention;
- Figure 7: shows a fifth example of shared route segments and detour segments in accordance with a fifth embodiment of the invention; and
- Figure 8: shows an exemplary message exchange between a plurality of transport means, a central unit, and an asset requesting transport in accordance with the present invention.

### Description of embodiments

In the figures, identical or similar elements are referenced using the same reference designators.

Figures 1 and 2 have been described further above in relation to the initial situation and will not be referred to in detail again.

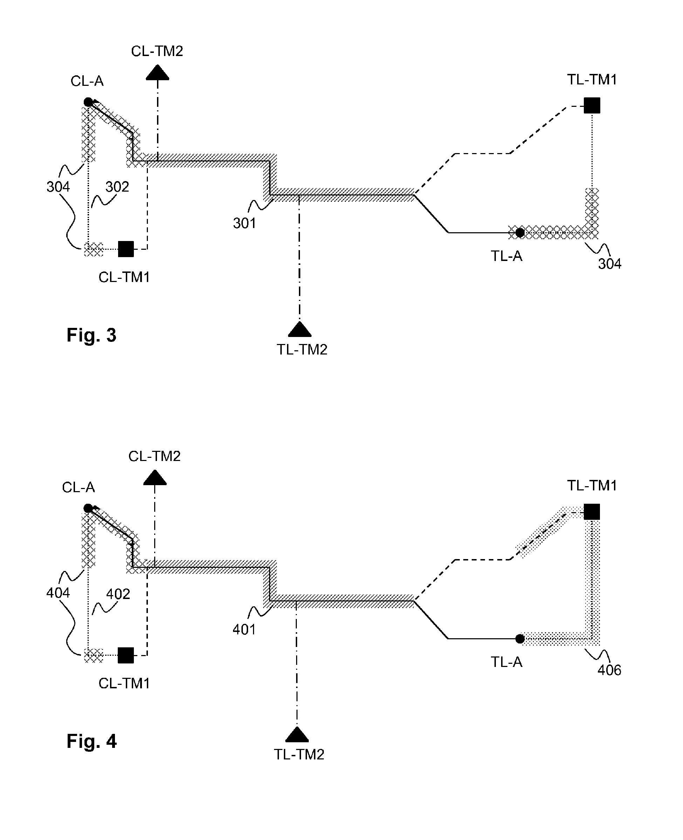

Figure 3 exemplarily shows a first route calculation for transporting the asset from its current location to its target location using the first transport means. Like figure 2 figure 3 shows current locations of an asset CL-A, a first transport means CL-TM1 and a second transport means CL-TM2 as well as target locations for the asset TL-A, the first transport means TL-TM1 and the second transport means TL-TM2. Also, figure 3 further shows, in dotted lines, respective ideal routes between the current locations of the asset and of the first transport means and between the target locations of the asset and of the first transport means. In this setting the asset may, e.g., correspond to a passenger requiring transport, and the transport means may correspond to taxis or other vehicles on roads connecting the current locations and the target locations.

The maximum length common route segment, or shared route segment, is highlighted by the diagonally hashed background and is labeled 301. If the first transport means were to fulfill the asset's transport request it would take the shortest or fastest route 302 to the asset's current location CL-A and pick up the asset. Then, the transport means would take the shortest or fastest route to the common route segment 301. The additional route length or traveling time for the transport means is indicated by the cross-hashing. Note that a part of the route is not cross-hashed, because the ideal route of the first transport means from its current location to the common route segment, without picking up the asset, would have had to be travelled anyway. The general direction of travel in this and the following figures is from left to right. At the end of the common route segment the ideal individual routes for the asset and the transport means bifurcate. In figure 3, the transport means takes the route to the asset's target location TL-A and drops off the asset. Then, the transport means takes the ideal route from the asset's target location TL-A to its target location TL-TM1, indicated by the dashed line. Again, the length of the detour is indicated by the cross-hashed background. The hashing does not extend over the entire ideal route from the asset's target location TL-A to its target location TL-TM1, because some distance had to be travelled from the bifurcation to the right and upwards anyway. In other words, the cross-hashing only highlights the additional length of the total route travelled.

The initial or original load of the first transport means takes all the detour, i.e. has an extended trip length and duration, while the asset is transported on its ideal route. This may be compensated for by correspondingly adjusting the transport fee. However, if giving the full burden to one party is not an option, a balancing of the burden may be considered. In order to allow for such balancing alternative routes need to be calculated, as shown in figure 4. The initial setting of current locations and target locations is the same as in figure 3. Again, the first transport means is selected for effecting the transport. Since the asset needs to be picked up under all circumstances, the first part of the route is identical to the one discussed with regard to figure 3. Route 402 is the ideal connection between the two current locations, and cross-hashing 404 indicates the detour for the original load of the first transport means. However, at the end of the common route segment 401, the transport means takes the route to its initial target location TL-TM1 and drops off its original load. Then, the first transport means continues to the asset's target location TL-A, taking the ideal connection between the two target locations as in figure 3, but in reverse direction. The detour for the asset is indicated by the dotted background 406. Similar as discussed with regard to figure 3 the detour to take by the asset is not the entire distance from the bifurcation to the asset's target location, because some further distance had to be travelled anyway. On this route both the original load of the first transport means and the asset have an extended trip length and duration as compared to their respective ideal routes. However, this route appears to be fairer as it puts some additional burden on each party.

The decision which route to take can be made based upon the preferences of the first transport means, or the load of the first transport means, and of the asset. The information required for making such decision can be transmitted to a central system that organizes the transport as a part of each transport request, or it can be previously defined in an asset's profile accessible by the central system. The central system determines a plurality of alternative routes and selects a transport means and a route that best matches the preferences. The central system and its real-time information gathering and operation will be described in greater detail further below.

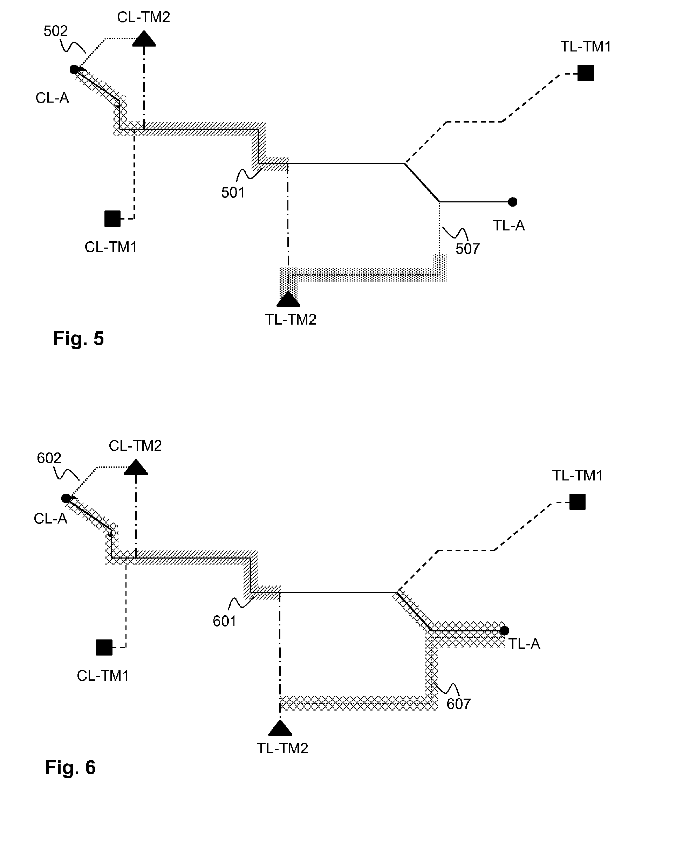

Having discussed alternative routes for the case of the first transport means fulfilling the asset's transport request with reference to figures 3 and 4, the initial situation allows for further alternatives that may be taken into account and which will be discussed in the following with reference to figures 5 and 6.

Figure 5 shows the same initial situation as figures 3 and 4. The highlighting of particular route segments is the same as in figure 4. This time the asset's transport request will be fulfilled by the second transport means. Even though it is readily apparent that the common route segment 501 of the asset's route and the route of the second transport means is shorter than in the previous examples, there may be reasons for favoring this alternative. For example, the first transport means may only be available after a longer waiting time than the first transport means, and the asset's transport request does not allow for such waiting time. It is readily apparent that connection 502 between the current locations of the asset and the second transport means is shorter than the connection between the current locations of the asset and the second transport means, e.g. reference 402 in figure 4, and it is thus very likely that the waiting time for the second transport means to arrive at the asset's current location is shorter. Once the second transport means has travelled the route from its current location CL-TM2 to the asset's current location CL-A and has picked up the assed, it takes the shortest or fastest way to the common route segment 501. At the end of the common route segment the two routes bifurcate. In this example the second transport means takes the route to its original target location TL-TM2 and drops off its initial load. Then the second transport means continues to the asset's target location using the shortest or fastest connection 507 between the two target locations TL-TM2 and TL-A. In this example the additional burden is shared between the asset and the original load of the second transport means, as shown by the different highlighting of the additional routes to be travelled by each respective party.

A similar situation as described with reference to figure 3 is shown in figure 6. In this alternative route the original load of the second transport means takes all the additional burden, since it has to travel to the asset's current location CL-A and its target location TL-A first and only then arrives at its own target location TL-TM2. The sum of additional route segments travelled in this example is substantial. As discussed before, it may be compensated for e.g. through a reduced transport fee. As the figure can be interpreted in the same manner as figures 3 to 5, it will not be discussed in detail.

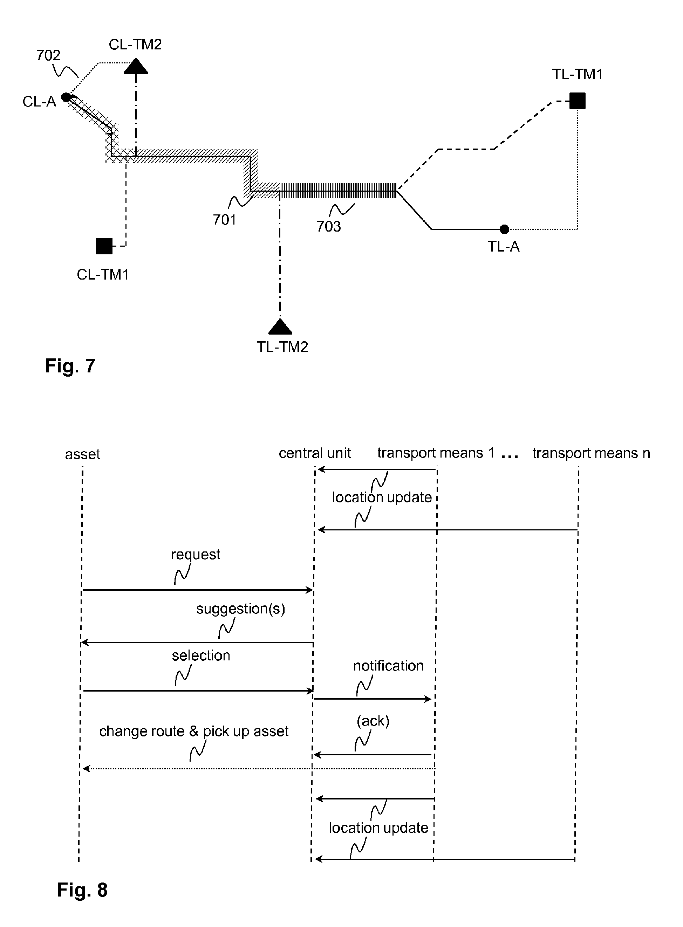

Figure 7 is an example of the asset taking two transport means for covering its entire route, including a change of transport means somewhere along the route. In this example the second transport means fulfills a first part of the asset's transport request in the same manner as described with reference to figures 5 and 6. At some point along the common route 701 of the asset and both transport means a changeover is scheduled.

This changeover is scheduled by the central system (not shown), which continuously or periodically at suitable time intervals receives real-time current location information from all transport means. Also, the actual location for the changeover may change at any time in response to updated location information, or even in response to a further transport means unpredictedly happening to be in a more favorable location to a changeover point and/or having a longer common route segment from the changeover point to the asset's target location. In general, whenever another transport means is crossing a route of an asset and has a route that has more common segments for the remainder of the asset's route or that has a target location that is closer to the asset's target location, or both, a changeover can be organized through the central system. A general availability for changeover and a waiting time for the changeover to take place may be negotiated before accepting a transport means. Current and updated properties of remaining routes until reaching changeover point may likewise be taken into account.

Following the changeover the first transport means fulfills a second part of the asset's transport request. A common route segment of the asset and the original route of the first transport means is labeled 703 in figure 7 and is highlighted in vertical hashing. At the end of the common route segment 703 the two routes bifurcate. The remaining trip can follow one of the routes discussed with reference to figures 3 and 4, and the selection can be made following the same principles as discussed before.

Further variants of routing and combinations thereof that are not shown in the figures are conceivable and only depend from the availability of transport means, asset's preferences, and corresponding negotiation. The route selection may prefer longest common routes, or fastest transport, or a weighted combination thereof. It is obvious that the route selection is even simpler in case one of the target locations of parties sharing a transport means is located on the route of the other party.

Figure 8 shows an exemplary message exchange between a plurality of transport means, a central unit, and an asset requesting transport in accordance with the present invention. Transport means 1 to n provide, regularly or continuously, location updates to a central unit. An asset requiring transport sends a corresponding request to the central unit. Based on information about the current locations and routes followed by each one of the plurality of transport means the central unit transmits one or more suggested transport means and routes to the asset, for selection. The selection for the asset is transmitted in return to the central unit, which notifies the selected transport means and provides information on the modified route. In this example, transport means 1 is selected. The selected transport means may optionally provide an acknowledgement to the central unit, and changes its route as determined by the central unit for picking up the asset. Location updates from the transport means to the central unit are repeated like at the beginning of the exemplary message exchange, and may also be effected in between the message exchanges.

## Claims

1. A method of enabling transport of physical assets including the steps of:
- receiving, for a physical asset, a current location, a target location and an indication of availability for detour from a direct route between the current location and the target location;
- receiving, from a plurality of transport means, respective current locations as well as respective planned routes and indications for general availability or availability for detour for each one of the plurality of transport means;
- determining, for each transport means that is generally available or that has indicated availability for detour, the distance to the current location of the physical asset and the sum of the lengths of common route segments amongst a planned route of a transport means and a route between the current location of the physical asset and its target location;
- selecting the transport means the current location of which is closest to the current location of the physical asset and/or for which the sum of the lengths of common route segments amongst the planned route of the transport means and the route between the current location of the physical asset and its target location is longest; and
- sending the current location of the physical asset and its target location to the selected transport means.

2. The method of claim 1, wherein the common route segments includes alternative route segments that are longer and/or would take longer to follow by a predetermined factor than a shortest route.

3. The method of claim 2, wherein the predetermined factor is calculated in dependence from information provided from the physical asset and transport means.

4. The method of claim 1, wherein the determining step further considers and evaluates detours based on results of a trend analysis for increasing the probability of enabling sharing further common route segments with additional physical assets picked up along the currently travelled route.

5. The method of any one of the preceding claims, wherein a transport fee to be paid is calculated based on parameters, or recalculated in response to parameters changing while servicing a transport, the parameters including but not limited to one or more of the availability for detour, the sum of the lengths of common route segments actually followed, the allowed waiting time, the number of assets transported by a single transport means along a currently served transport route, or the transport duration time eventually resulting from sharing a transport means.

6. The method of any one of the preceding claims, wherein the current locations of physical assets and/or the transport means are received from a cloud-based database, which cloud-based database received the locations from a transmitter co-located with the physical asset and/or the transport means.

7. The method of claim 6, wherein receiving includes receiving via a wireless connection and/or wired connection

8. The method of claim 6, wherein, once received, the current locations and target locations of physical assets are published through the cloud-based database, and wherein a transport means is selected after a bidding process operated through the cloud-based database.

9. The method of claim 8, wherein the bidding process is open exclusively to subscribers of a service offering the transport enabling method.

10. The method of any one of the preceding claims, wherein the current location information includes a time stamp.

11. The method of any one of the preceding claims, wherein the current location information is assigned a time during which it is valid after transmission or reception.

12. A computer system including an interface adapted for receiving location information and transport requests, a processor, a data memory and a program memory, wherein the computer system is adapted to perform the method of one of claims 1 to 11.

13. A data storage for non-transitory storing a computer program which, when executed on a computer system, performs the method of one of claims 1 to 11.

14. A device for negotiating transport of physical assets in accordance with the method of claims 1 to 11, including a locating means adapted for determining a present location of a physical asset with which it is co-located, a real time clock, further including a memory providing a target location, a validity duration information, and an indication of availability for detouring, and further including a transmitter adapted for transmitting the present and the target location, the time, the validity duration information and the indication of availability for detouring to a computer system executing the method of one of claims 1 to 11.
